# EUROPÄISCHE PATENTANMELDUNG

(11) **EP 1 514 728 A2**
(43) Veröffentlichungstag der Anmeldung: **16.03.2005**
(21) Anmeldenummer: 04021258.1
(22) Anmeldetag: 08.09.2004
(51) Int. Cl.: B60P 3/16

(54) **Silofahrzeug, insbesondere Beschickungsfahrzeug**

(30) Priorität: 11.09.2003 DE 10342235
(71) Anmelder: GLAMA Maschinenbau GmbH, 45964 Gladbeck (DE)
(72) Erfinder: Schwarz, Reinhard, 45966 Gladbeck (DE)
(74) Vertreter: Radünz, Ingo, Dipl.-Ing.

(57) **Zusammenfassung**

Ein Silofahrzeug, insbesondere ein Beschickungsfahrzeug für Elektrolysezellen zur Herstellung von Aluminium, besteht aus einem Fahrgestell (2), einer Fahrerkanzel (3) und einem Silobehälter (4) zur Aufnahme von Material. Der Silobehälter (4) ist in Fahrtrichtung schräg ansteigend angeordnet, weist ein in Fahrtrichtung vorne liegendes Austragsende auf, ist in zwei einander entgegen gerichteten Drehrichtungen drehbar und ist mit einer innenliegenden Schnecke (7) zur Förderung des Materials zum Austragsende versehen. Das Austragsende des Silobehälters (4) besteht aus einen drehbaren Kopfteil (8), an dem ein Fördersystem befestigt ist. Dieses Fördersystem ist als angetriebener Stetigförderer ausgebildet.

## Beschreibung

Die Erfindung betrifft ein Silofahrzeug, insbesondere ein Beschickungsfahrzeug, für Elektrolysezellen zur Herstellung von Aluminium mit den Merkmalen des Oberbegriffes des Anspruches 1.

Derartige Beschickungsfahrzeuge wie die Anodeneindeckfahrzeuge oder die Tonerde/Kryolith-Beschickungsfahrzeuge der Aluminiumindustrie sind Spezialfahrzeuge, die die Aufgabe haben, die Elekrolysezellen oder Elektrolyseöfen zu beschicken, wobei das Rohmaterial, nämlich das Tonerde-Kryolith-Gemisch auf der Badoberfläche verteilt wird und die Anoden bedeckt werden. Diese Fahrzeuge können einen trapezförmigen Silobehälter aufweisen, der feststehend an dem Fahrzeug angebracht ist und der über Schnecken- oder Kettenfördersysteme oder pneumatisch entleert wird. Die Entleerung des Silobehälters der Fahrzeuge erfolgt in der Regel auf Flurhöhe und bis zu einer Höhe von etwa 1 m über Flur.

Weiterhin sind mit trapezförmigen Silobehältern versehene Beschickungsfahrzeuge bekannt, welche die Zwischenspeicher von Elektrolysezellen beschicken, die mit zentralen, automatischen Verteilanlagen versehen sind. Die Nachfüllpunkte dieser Verteilanlagen befinden sich im Allgemeinen in einer Höhe von 1,5 m bis 3 m über Flur. Die Entleerung der Silobehälter ist aufgrund der zu überwindenden Höhe ausschließlich über Kettenoder Schneckentransportsysteme oder pneumatisch möglich. Dabei muss das Schüttgut jeweils von dem unteren Bereich des Silobehälters auf die benötigte Höhe gefördert werden.

Bei den trapezförmigen, feststehenden Silobehältern der Beschickungsfahrzeuge neigt das Schüttgut häufig zu Verklebungen oder Anbackungen im Bereich des Behälterauslaufes, zumal wenn das Schüttgut während des Transportes durch externe Vibrationen verdichtet wird. Durch diese Verklebungen und Anbackungen kann häufig kein Schüttgut aus dem Silobehälter ausgetragen werden. Dasselbe Problem tritt auch an den Schnecken- oder Kettentransportsystemen auf, die in vertikaler oder stark geneigter Lage angeordnet sind, um das Schüttgut vom Behälteraustragsende aus in die nötige Einfüllhöhe an der Elektrolysezelle zu transportieren. Verstärkt wird dieses Problem, wenn inhomogene Verunreinigungen wie z. B. Hülsen oder andere Fremdkörper im Schüttgut enthalten sind.

Andere bekannte Beschickungsfahrzeuge (DE 198 45 573 A1) besitzen drehbare Silobehälter mit einer innenliegenden Schnecke, deren Austragsende seitlich oberhalb der Fahrerkanzel angeordnet ist. Diese Beschickungsfahrzeuge sind zur Entleerung mit einer teleskopierbaren Rutsche oder einem Förderohr versehen, die sich auf einer Seite des Fahrzeuges befindet und in einem Winkel von 20° bis 40° schwenkbar ist. Aufgrund der nach unten gerichteten Schwerkraftentladung können mit diesen Beschickungsfahrzeugen mit Hilfe der Rutsche nur Höhen bis zu 1 m über Flur beschickt werden. Größere Höhen sind vor allem deshalb nicht möglich, weil die Ofenhallen und die Transportwegen am Einsatzort nur beschränkte Fahrzeughöhen von 3 m bis maximal 3,5 m zulassen so dass ein Entleeren über Rutschen auf größere Höhen nicht möglich ist.

Der Erfindung liegt die Aufgabe zugrunde, das gattungsgemäße Silo- insbesondere Beschickungsfahrzeug derart zu verbessern, dass Verklebungen und Anbackungen des Schüttguts im Silobehälter und im Fördersystem vermieden werden und dass mit einem einzigen Fahrzeug sowohl Öffnungen auf Flurhöhe als auch Zwischenspeicher in größeren Höhen beschickt werden können.

Die Aufgabe wird bei einem gattungsgemäßen Silofahrzeug, insbesondere einem Beschickungsfahrzeug, erfindungsgemäß durch die kennzeichnenden Merkmale des Anspruches 1 gelöst. Vorteilhafte Ausgestaltungen der Erfindung sind Gegenstand der Unteransprüche.

Das mit einem angetriebenen Stetigförderer versehene Silofahrzeug kann unter Ausnutzung der Fahrzeughöhe auch höher gelegene Einfüllöffnungen bedienen, wobei sowohl durch die innenliegende Schnecke im Silobehälter als auch aufgrund der zwangsweisen Förderung des Stetigförderers Verklebungen und Anbackungen des Schüttguts im Silobehälter und im Stetigförderer vermieden werden. Tiefer und auf Flurhöhe liegende Einfüllöffnungen können ebenfalls durch den Stetigförderer, gegebenenfalls in Verbindung mit einer nach unten gerichteten Rutsche, bedient werden.

Mehrere Ausführungsbeispiele der Erfindung sind in der Zeichnung dargestellt und werden im Folgenden näher erläutert. Es zeigen:
- Fig. 1: die Seitenansicht eines Beschickungsfahrzeuges,
- Fig. 2: die Draufsicht auf das Beschickungsfahrzeug nach Fig. 1,
- Fig. 3: die Vorderansicht des Beschickungsfahrzeuges nach Fig. 1
- Fig. 4: die Seitenansicht eines Beschickungsfahrzeuges gemäß einer anderen Ausführungsform,
- Fig. 5: die Draufsicht auf das Beschickungsfahrzeug nach Fig. 4,
- Fig. 6: die Vorderansicht des Beschickungsfahrzeuges nach Fig. 4
- Fig. 7: die Seitenansicht eines Beschickungsfahrzeuges gemäß einer weiteren Ausführungsform,
- Fig. 8: die Draufsicht auf das Beschickungsfahrzeug nach Fig. 7 und
- Fig. 9: die Vorderansicht des Beschickungsfahrzeuges nach Fig. 7

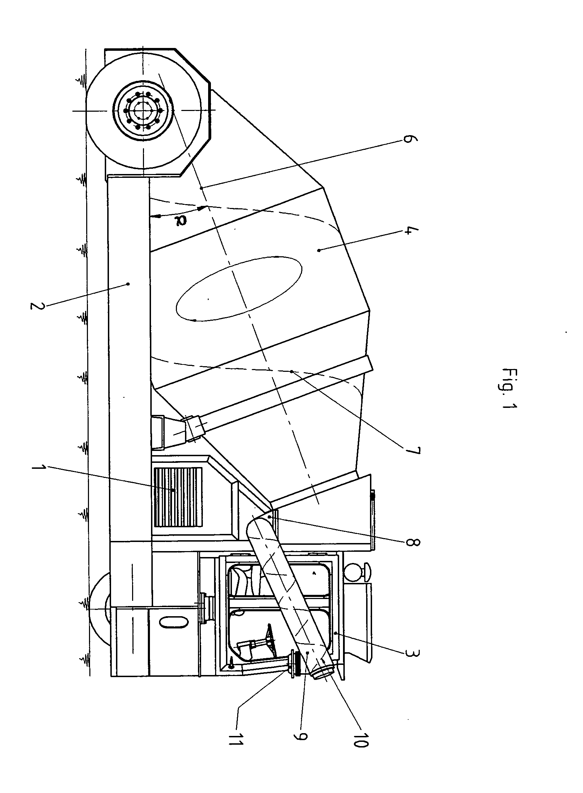

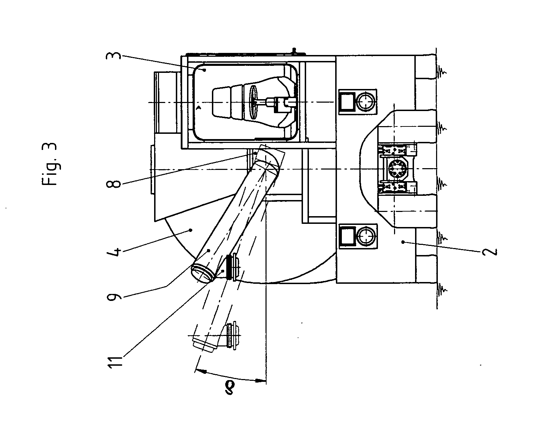

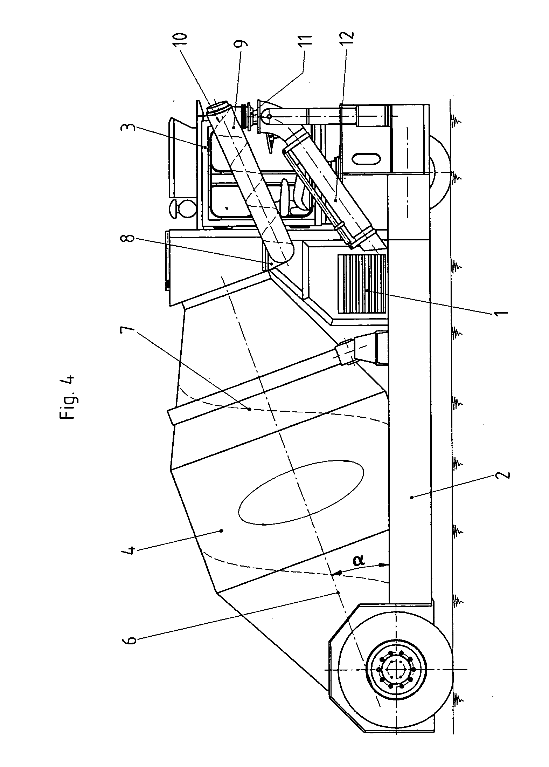

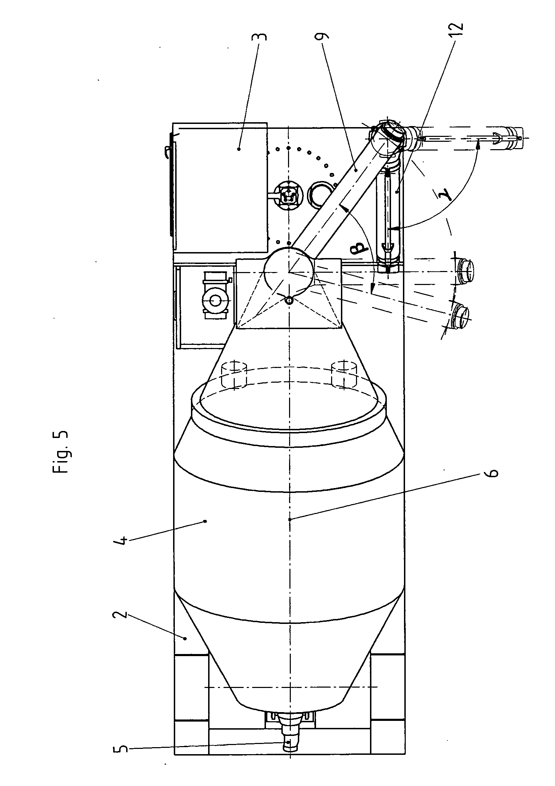

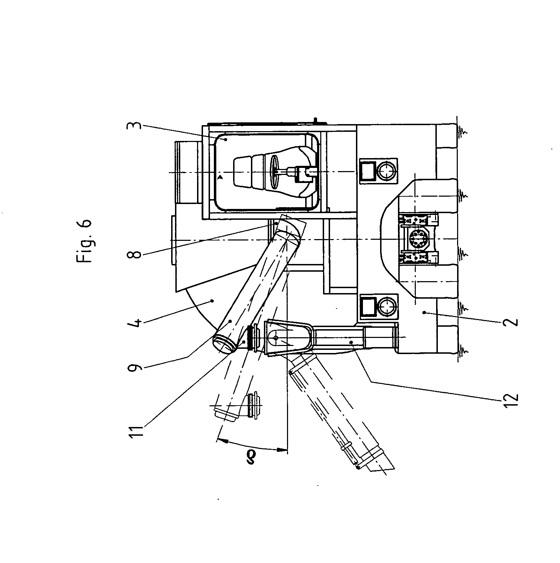

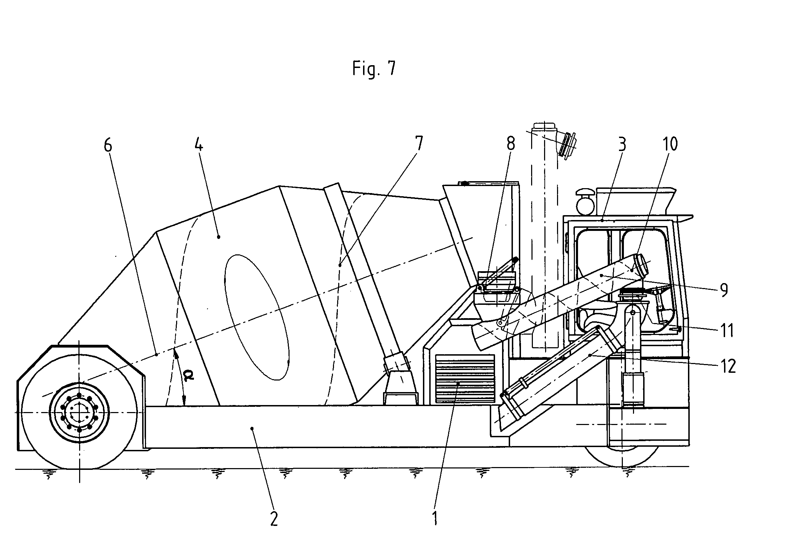

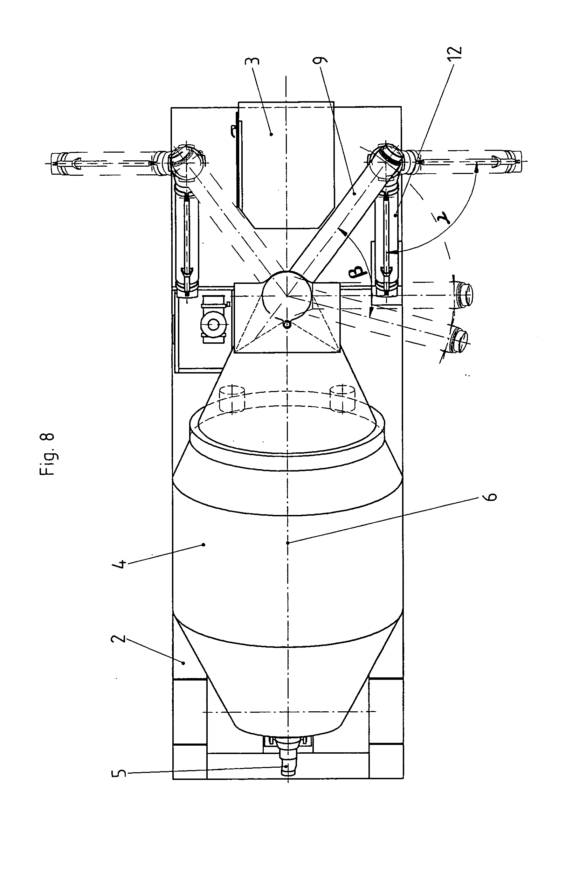

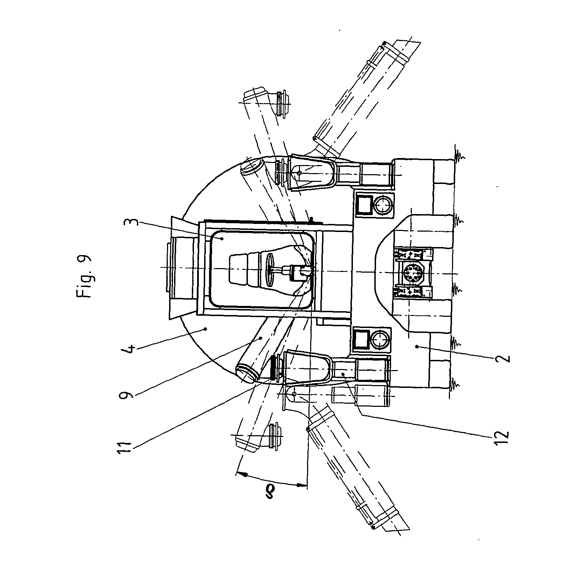

Das dargestellte Silo- oder Beschickungsfahrzeug dient in der Aluminiumindustrie zur Beschickung von Elektrolysezellen mit einem schüttfähigen Gemisch aus Tonerde und Kryolith. Das durch einen Motor 1 angetriebene Beschickungsfahrzeug besteht aus einem Fahrgestell 2, auf dem vorne seitlich (Fig. 1 - 6) oder mittig (Fig. 7 - 9) eine Fahrerkanzel 3 angeordnet ist. Hinter der Fahrerkanzel 3 ist auf dem Fahrgestell 2 ein Silobehälter 4 angeordnet, der in zwei einander entgegengerichteten Drehrichtungen drehbar ist. Die Drehung des Silobehälters 4 erfolgt über einen Hydraulikmotor 5.

Der Silobehälter 4 ist in Fahrtrichtung schräg ansteigend geneigt, wobei die Längsachse 6 des Silobehälters 4 mit der Horizontalen einen Winkel α von 20° einschließt. An der Innenwand des Silobehälters 4 ist eine innenliegende Schnecke 7 so befestigt, dass bei einer Drehrichtung die innenliegende Schnecke 7 das im Silobehälter 4 befindliche Schüttgut in Richtung auf das Austragsende des Silobehälters 4 fördert. Dieses Austragsende befindet sich an dem oberen Ende des Silobehälters 4 gerade hinter der Fahrerkanzel 3. Während der Fahrt des Beschickungsfahrzeuges wird das Schüttgut ständig in Bewegung gehalten, indem der Silobehälter 4 in der Drehrichtung gedreht wird, die der Drehrichtung entgegen gerichtet ist, in der die innenliegende Schnecke 7 fördert. Auf diese Weise wird verhindert, dass das Schüttgut durch Vibration oder Stöße während der Fahrt verdichtet wird.

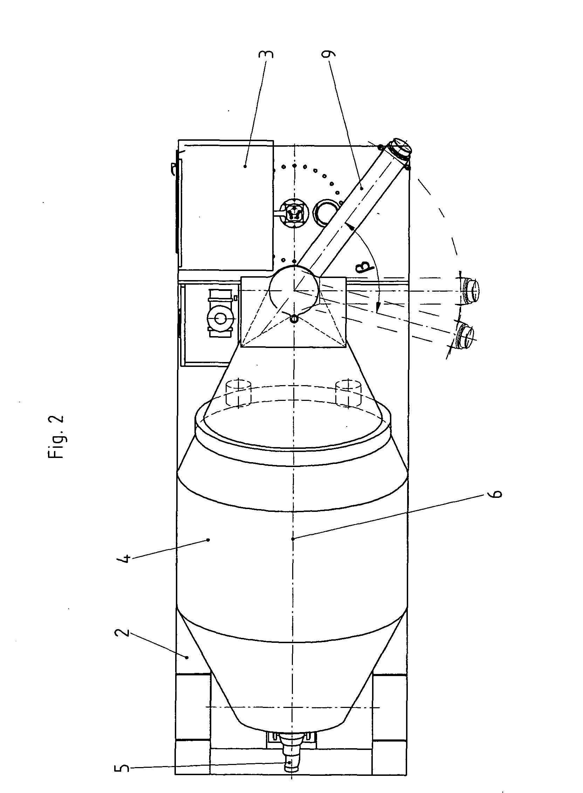

Das Austragsende des Silobehälters 4 ist als schwenkbares Kopfteil 8 ausgebildet, das in der Horizontalen um einen Winkel β von 0° bis 240° schwenkbar ist. An dem schwenkbaren Kopfteil 8 ist ein Schneckenfördersystem 9 befestigt, das gegen die Horizontale um einen Winkel von δ = 15° schräg nach oben gerichtet ist. Das Schneckenfördersystem 9 besteht aus mindestens einer innerhalb eines Gehäuses angeordneten Schnecke 10, die eine angetriebene Schneckenwelle mit einem aufgesetzten Schneckengang aufweist. Am vorderen Ende ist das Gehäuse des Schneckenfördersystems 9 mit einem nach unten weisenden Abwurfstutzen 11 versehen. In der Ausgangslage (ausgezogene Linien in Fig. 2) befindet sich das Schneckenfördersystem 9 schräg in Fahrtrichtung weisend oberhalb der Grundfläche des Fahrgestells 2. Das Schneckenfördersystem 9 kann zusammen mit dem schwenkbaren Kopfteil 8 des Silobehälters 4 aus dieser Ausgangslage um einen Winkel β von 0° bis 240° geschwenkt und über eine Einfüllöffnung an der Elektrolysezelle gebracht werden. Das in dem Silobehälter 4 befindliche Schüttgut wird durch die innenliegende Schnecke 7 zum Kopfteil 8 transportiert und über das Schneckenfördersystem 9 sicher zu einer hoch gelegenen Einfüllöffnung der Elektrolysezelle gefördert. Der Beschickungsvorgang kann von der Fahrerkanzel 3 aus überwacht werden.

Das Schneckenfördersystem 9 kann auch tiefer gelegene Einfüllöffnungen, z. B. solche auf Flurhöhe beschicken oder das Material auf der Badoberfläche der Elektrolysezelle verteilen. Vorzugsweise wird hierzu eine offene Rutsche 12 zu Hilfe genommen, die seitlich neben der Fahrerkanzel 3 auf dem Fahrgestell 2 angebracht und nach unten gerichtet ist. Dabei liegt das Eintrittsende der Rutsche 12 unterhalb des Abwurfstutzens 11 des Schneckenfördersystems 9, wenn sich dieses in der Ausgangslage befindet. Anstelle einer offenen Rutsche 12 kann auch ein Förderrohr verwendet werden. Die Rutsche 12 ist um einen Winkel γ schwenkbar, wodurch das Austrittsende der Rutsche 12 aus dem Bereich des Fahrgestells 2 über die Badoberfläche der Elektrolysezelle herausgeschwenkt und somit das Material gleichmäßig verteilt werden kann. Auch in diesem Fall kann der Beschickungsvorgang von der Fahrerkanzel 3 aus beobachtet werden. Da das beschriebene Schneckenfördersystem 9 Verklebungen und Anbackungen des Schüttguts im Schneckenfördersystem vermeidet, ist der Einsatz einer Schwerkraftförderung über die Rutsche 12 oder das Förderrohr in Verbindung mit diesem Schneckenfördersystem 9 unproblematisch.

Wie in den Fig. 7 - 9 gezeigt ist, können auch zwei Rutschen 12 oder Förderrohre vorhanden sein, die beiderseits der Fahrerkanzel 3 auf dem Fahrgestell 2 angebracht sind. In diesem Fall ist die Fahrerkanzel 3 mittig auf dem Fahrgestell 2 angeordnet. Die beiden Rutschen 12 stehen mit einem Schneckenfördersystem 9, das um die Fahrerkanzel 3 herum geschwenkt wird, oder mit zwei Schneckenfördersystemen 9 in Verbindung.

Anstelle des beschriebenen Schneckenfördersystems kann auch ein anderer Stetigförderer, wie ein Kettenförderer, ein Gurtförderer oder ein pneumatischer Förderer eingesetzt werden.

## Patentansprüche

1. Silofahrzeug, insbesondere Beschickungsfahrzeug für Elektrolysezellen zur Herstellung von Aluminium, bestehend aus einem Fahrgestell (2), einer Fahrerkanzel (3) und einem Silobehälter (4) zur Aufnahme von Material, wobei der Silobehälter (4) in Fahrtrichtung schräg ansteigend angeordnet ist, ein in Fahrtrichtung vorne liegendes Austragsende aufweist, in zwei einander entgegen gerichteten Drehrichtungen drehbar ist und mit einer innenliegenden Schnecke (7) zur Förderung des Materials zum Austragsende versehen ist und wobei das Austragsende des Silobehälters (4) aus einen drehbaren Kopfteil (8) besteht, an dem ein Fördersystem befestigt ist, **dadurch gekennzeichnet, dass** das Fördersystem als angetriebener Stetigförderer ausgebildet ist.

2. Silofahrzeug nach Anspruch 1, **dadurch gekennzeichnet, dass** seitlich neben der Fahrerkanzel (3) am Fahrgestell (2) eine nach unten gerichtete Rutsche (12) oder ein Förderrohr schwenkbar angebracht ist, dass die Rutsche (12) oder das Förderrohr teleskopartig ausziehbar ist und dass das Eintrittsende der Rutsche (12) oder des Förderrohres unterhalb des Abwurfstutzens (11) des Stetigförderers angeordnet ist.

3. Silofahrzeug nach Anspruch 2, **dadurch gekennzeichnet, dass** die Fahrerkanzel (3) mittig auf dem Fahrgestell (2) angeordnet ist und dass beiderseits der Fahrerkanzel (3) eine Rutsche (12) oder ein Förderrohr am Fahrgestell (2) angebracht ist.

4. Silofahrzeug nach einem der Ansprüche 1 bis 3, **dadurch gekennzeichnet, dass** das Kopfteil (8) mit dem verbundenen Stetigförderer um einen Winkel von β = 0° bis 240° schwenkbar ist.

5. Silofahrzeug nach Anspruch 1, **dadurch gekennzeichnet, dass** der Stetigförderer ein Schneckenfördersystem (9) ist, das aus mindestens einer Schnecke (10) besteht.

6. Silofahrzeug nach einem der Ansprüche 1 oder 2 bis 4, **dadurch gekennzeichnet, dass** der Stetigförderer ein Kettenförderer ist.

7. Silofahrzeug nach einem der Ansprüche 1 oder 2 bis 4, **dadurch gekennzeichnet, dass** der Stetigförderer ein Gurtförderer ist.

8. Silofahrzeug nach einem der Ansprüche 1 oder 2 bis 4, **dadurch gekennzeichnet, dass** der Stetigförderer ein pneumatischer Förderer ist.
